Europäisches Patentamt

European Patent Office

Office européen des brevets

(19)

(11) **EP 1 287 741 B1**

(12) **EUROPEAN PATENT SPECIFICATION**

(45) Date of publication and mention
of the grant of the patent:
**21.07.2004 Bulletin 2004/30**

(51) Int Cl.[7]: **A01N 59/02**
// (A01N59/02, 59:00)

(21) Application number: **02018719.1**

(22) Date of filing: **21.08.2002**

(54) **Microbicidal and algicidal composition, microbicidal and algicidal process for the treatment of a water system, and process for producing a microbicidal and algicidal composition**

Mikrobizide und algizide Zusammensetzung, mikrobizides und algizides Verfahren für die Behandlung eines Wassersystems und Verfahren, um eine mikrobizide und algizide Zusammensetzung herzustellen

Composition microbicide et algicide, procédé microbicide et algicide pour le traitement d'un système d'eau et procédé pour la préparation d'une composition microbicide et algicide

(84) Designated Contracting States:
**AT BE BG CH CY CZ DE DK EE ES FI FR GB GR IE IT LI LU MC NL PT SE SK TR**

(30) Priority: **28.08.2001 JP 2001258447**
**25.07.2002 JP 2002217039**

(43) Date of publication of application:
**05.03.2003 Bulletin 2003/10**

(73) Proprietor: **Kurita Water Industries Ltd.**
**Shinjuku-ku, Tokyo 160-8383 (JP)**

(72) Inventors:
• **Nagai, Naohiro, c/o Kurita Water Industries Ltd.**
**Tokyo 160-8383 (JP)**

• **Morita, Akira, c/o Kurita Water Industries Ltd.**
**Tokyo 160-8383 (JP)**
• **Tsuneki, Takao c/o Kurita Water Industries Ltd.**
**Tokyo 160-8383 (JP)**
• **Uchida, Takahiko,**
**c/o Kurita Water Industries Ltd.**
**Tokyo 160-8383 (JP)**

(74) Representative: **Goddar, Heinz J., Dr.**
**FORRESTER & BOEHMERT**
**Pettenkoferstrasse 20-22**
**80336 München (DE)**

(56) References cited:
**EP-A- 0 252 483**          **WO-A- 01/00029**
**US-A- 3 328 294**          **US-A- 3 749 672**
**US-A- 3 767 586**          **US-A- 5 064 554**

EP 1 287 741 B1

**Description**

BACKGROUND OF THE INVENTION

1. Field of the Invention

The present invention relates to a microbicidal and algicidal composition, a microbicidal and algicidal process for a water system and a process for producing a microbicidal and algicidal composition. More particularly, the present invention relates to a microbicidal and algicidal composition, a microbicidal and algicidal process for a water system and a process for producing a microbicidal and algicidal composition, which are characterized in that decomposition of effective components by the effect of ultraviolet light and copper ion is suppressed when the composition is left standing, stored or used outdoors.

2. Description of Related Art

Various troubles caused by microorganisms and algae have been taking place in many types of water system. For example, bacteria such as zooglea-form bacteria, filamentous bacteria, iron bacteria, sulfur bacteria, nitration bacteria and sulfate reduction bacteria, fungi such as saprolegnia and penicillium and algae such as blue algae, green algae and diatoms grow in a cooling water system of the open circulation type. Slime and sludge are formed by attachment and accumulation of dirt in a soft mud condition which is formed from a mixture containing these microorganisms as the main component, inorganic substances such as soil and sand and dusts. Slime and sludge cause not only a decrease in the heat efficiency and poor water flow but also local corrosion of instruments and piping. Occasionally, bacteria grown in the water system directly exhibit adverse effects on human health. For example, legionnaires' disease is caused by Legionella bacteria scattered from cooling towers. In a water system in the paper manufacturing, various types of bacteria, fungi and yeast grow and slime is formed. Slime causes not only defects in the product such as holes, spots and eyes to decrease the quality of the product but also break in the manufactured paper sheet to decrease the productivity.

To prevent the troubles caused by microorganisms and algae such as those described above, it has heretofore been conducted that a chlorine-based oxidizing agent such as a hypochlorite is added to the water system. It has been considered that, in general, the growth of microorganisms and algae can be suppressed when the concentration of residual chlorine in water is 5 mg Cl/liter or higher. However, decomposition of the chlorine-based oxidizing agent such as a hypochlorite tends to be accelerated by exposure to ultraviolet light. When a microbicidal and algicidal agent is placed into a plastic container or the like and stored or left standing outdoors, the chlorine-based oxidizing agent as the effective component is decomposed by exposure to ultraviolet light. After the microbicidal and algicidal agent is dissolved into water, it is difficult in a cooling water system of the open circulation type that the cooling water is completely shielded from light. Moreover, when copper or a copper alloy is used for the material of piping and a heat exchanger in the water system and copper ion is eluted into the water, decomposition of the chlorine-based oxidizing agent such as a hypochlorite is further accelerated.

It has been known that the effective chlorine component can be stabilized by adding sulfamic acid or a salt thereof to a hypochlorite so that N-monochlorosulfamic acid, N,N-dichlorosulfamic acid or salts thereof are formed. However, even when the stabilization is achieved by the addition of sulfamic acid or a salt thereof, a problem remains with respect to the stability of the agent when the tank of the agent is placed outdoors and exposed to ultraviolet light.

Bernhardt et al (EP-A-0 252 483) disclose two methods for the preparation of oxidizing compositions which comprise addition of aqueous sulfamate, aqueous sodium hydroxide, and sodium hypochlorite, wherein the resulting solutions have a calculated pH of greater than 13 (column 4, line 35 to column 5, line 21). Jacobs et al. (US-A-5,064,554) disclose oxidizing compositions with a calculated pH of greater than 13, comprising monochlorosulfamate (resulting from the reaction of sulfamic acid or a salt thereof and a chlorine-based oxidizing agent) and an active chlorine donor (Example 1, Claim 1, and column 4, lines 14-23). Golton et al. (US-B-3 749 672) and Rutkiewic (US-B-3 767 586) disclose the preparation of stable aqueous systems containing an N-hydrogen compound and a hypobromite, hypochlorite in equilibrium with the corresponding N-halo compound or compounds, the stability being provided by inclusion of a buffer which maintains the pH of the system between 4 and 11 (Abstract). Rees et al. (WO 01/00029 A) disclose the antimicrobial efficacy and storage stability of buffered (pH between 2 and 10) N-chlorosulfamate solutions doped with other known hypochlorite stabilizing agents, such as 5,5-diatkyl hydantoins, arylsulfonamides, and succinimides (Abstract, page 3, line 25 to page 4, line 12 and page 20, line 10 to page 21, line 6). In another embodiment, Rees et al. disclose a method of controlling a microbe population in a process stream or in a cooling tower, comprising addition to the system of the stabilized hypochlorite aqueous solution, comprising sulfamate, hypochlorite, and a dopant (page 5, lines 20 to 26). However, any of these prior arts fails to teach or suggest that the decomposition of the chlorine-based oxidizing agent could be suppressed and the high concentration of residual chloride could be maintained by maintaining the pH of a microbicidal and algicidal composition containing the chlorine-based oxidizing agent and sulfamic acid or a salt thereof at a pH of 13 or greater in the presence of an azole compound.

Therefore, a the microbicidal and algicidal composition and a microbicidal and algicidal process for a water system in which the loss in the effective components can be suppressed even when the composition is stored or used or the process is conducted in the environment exposed to ultraviolet light or in the presence of copper ion has been desired.

SUMMARY OF THE INVENTION

The present invention has an object of providing a microbicidal and algicidal composition and a microbicidal and algicidal process for a water system in which decomposition of the effective components by the effect of ultraviolet light and copper ion can be suppressed even when the composition is left standing, stored or used outdoors or the process is conducted outdoors and a process for producing the microbicidal and algicidal composition.

As the result of extensive studies by the present inventors to achieve the above object, it was found that the decomposition of the chlorine-based oxidizing agent could be suppressed by maintaining pH of a microbicidal and algicidal composition containing the chlorine-based oxidizing agent and sulfamic acid or a salt thereof at 13 or greater and that the decomposition of the chlorine-based oxidizing agent was more effectively suppressed when an azole compound was contained and the high concentration of residual chlorine could be maintained. The present invention has been completed based on the above knowledge.

The present invention provides:

(1) A microbicidal and algicidal composition which comprises chlorine-based oxidizing agent and sulfamic acid or a salt thereof and has a pH of 13 or greater;

(2) A composition described in (1), wherein the chlorine-based oxidizing agent is sodium hypochlorite;

(3) A composition described in any one of (1) and (2), wherein a content of sulfamic acid or a salt thereof is in a range of 0.3 to 1.5 moles per 1 mole of available chlorine in the chlorine-based oxidizing agent;

(4) A composition described in any one of (1), (2) and (3), wherein a content of the chlorine-based oxidizing agent is in a range of 3 to 12% by weight expressed as the content of available chlorine;

(5) A microbicidal and algicidal composition which comprises a chlorine-based oxidizing agent, an azole-based compound and sulfamic acid or a salt thereof;

(6) A composition described in (5), which has a pH of 13 or greater;

(7) A composition described in any one of (5) and (6), wherein the chlorine-based oxidizing agent is sodium hypochlorite;

(8) A composition described in any one of (5), (6) and (7), wherein the azole-based compound is benzotriazole or tolyltriazole;

(9) A composition described in any one of (5), (6), (7), and (8), wherein a content of sulfamic acid or a salt thereof is in a range of 0.3 to 1.5 moles per 1 mole of available chlorine in the chlorine-based oxidizing agent;

(10) A composition described in any one of (5), (6), (7), (8) and (9), wherein a content of the azole-based compound is in a range of 0.05 to 3% by weight;

(11) A composition described in any one of (5), (6), (7), (8), (9) and (10), wherein a content of the chlorine-based oxidizing agent is in a range of 3 to 12% by weight expressed as the content of available chlorine;

(12) A microbicidal and algicidal process for a water system which comprises adding a chlorine-based oxidizing agent, an azole-based compound and sulfamic acid or a salt thereof to the water system;

(13) A process described in (12), wherein the chlorine-based oxidizing agent is sodium hypochlorite;

(14) A process described in any one of (12) and (13), wherein the azole-based compound is benzotriazole or tolyltriazole;

(15) A process for producing a microbicidal and algicidal composition which comprises preparing an aqueous solution comprising at least sulfamic acid or a salt thereof and a pH regulator and, thereafter, adding a chlorine-based oxidizing agent to the prepared aqueous solution;

(16) A process described in (15), wherein the chlorine-based oxidizing agent is sodium hypochlorite;

(17) A process described in any one of (15) and (16), wherein a content of the chlorine-based oxidizing agent is in a range of 3 to 12% by weight expressed as the content of available chlorine;

(18) A process described in any one of (15), (16) and (17), wherein a content of sulfamic acid or a salt thereof is in a range of 0.3 to 1.5 moles per 1 mole of available chlorine in the chlorine-based oxidizing agent;

(19) A process described in any one of (15), (16), (17) and (18), wherein the aqueous solution comprising at least sulfamic acid or a salt thereof and a pH regulator further comprises an azole-based compound; and

(20) A process described in any one of (15), (16), (17), (18) and (19), wherein a content of the azole-based compound is in a range of 0.05 to 3% by weight.

BRIEF DESCRIPTION OF THE DRAWINGS

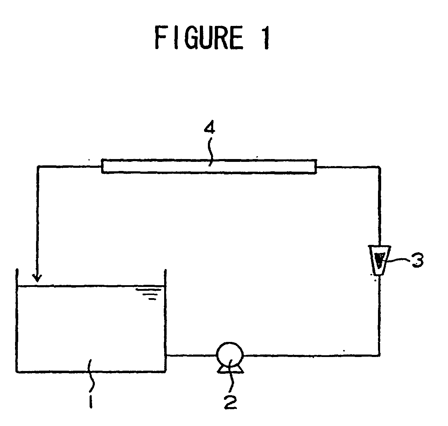

Figure 1 shows a system diagram of a circulating water system used in Examples. The numbers in Figure 1 have the following meanings:

1: Water tank
2: A pump
3: A flow meter
4: A copper tube

DESCRIPTION OF THE PREFERRED EMBODIMENTS

The first embodiment of the present invention relates to a microbicidal and algicidal composition which comprises chlorine-based oxidizing agent and sulfamic acid or a salt thereof and has a pH of 13 or greater. The second embodiment of the present invention relates to a microbicidal and algicidal composition which comprises a chlorine-based oxidizing agent, an azole-based compound and sulfamic acid or a salt thereof. In the second embodiment of the present invention, it is preferable that the microbicidal and algicidal composition has a pH of 13 or greater. The microbicidal and algicidal process for a water system of the present invention comprises adding a chlorine-based oxidizing agent, an azole-based compound and sulfamic acid or a salt thereof to a water system. By using the composition of the present invention or in accordance with the process of the present invention, decomposition of the effective components is suppressed even in the environment exposed to ultraviolet light. Therefore, the high concentration of residual chlorine is maintained and the microbicidal and algicidal effect is effectively exhibited. Formation of slime in a cooling water system or the like can be prevented and attached slime can be cleaved.

The chlorine-based oxidizing agent used in the present invention is not particularly limited. Examples of the chlorine-based oxidizing agent include chlorine gas, chlorine dioxide, hypochlorous acid and salts thereof, chloric acid and salts thereof, perchloric acid and salts thereof and chlorinated isocyanuric acid and salts thereof. Among these chlorine-based oxidizing agents, hypochlorous acid and salts thereof are preferable. Examples of the salt of hypochlorous acid include sodium hypochlorite, potassium hypochlorite, calcium hypochlorite and barium hypochlorite. In the composition of the present invention, the content of the chlorine-based oxidizing agent is not particularly limited. It is preferable that the content of the chlorine-based oxidizing agent is in the range of 3 to 12% by weight expressed as the content of available chlorine and more preferably in the range of 4 to 8% by weight expressed as the content of available chlorine.

The salt of sulfamic acid used in the present invention is not particularly limited. Examples of the salt of sulfamic acid include sodium sulfamate, potassium sulfamate, calcium sulfamate, strontium sulfamate, barium sulfamate, iron sulfamate and zinc sulfamate. The sulfamic acid and the salt thereof may be used singly or in combination of two or more.

Hypochlorite ion and sulfamic acid react with each other as shown in the following equations and N-monochlorosulfamate ion or N,N-dichlorosulfamate ion is formed to stabilize the effective components of the chlorine-based oxidizing agent.

$$ClO- + H_2NSO_3H \rightarrow HClNSO_3^- + H_2O$$

$$2ClO- + H_2NSO_3H + H^+ \rightarrow Cl_2NSO_3^- + 2H_2O$$

In the composition of the present invention, the content of sulfamic acid or the salt thereof is not particularly limited. It is preferable that the content of sulfamic acid or the salt thereof is in the range of 0.3 to 1.5 moles and more preferably in the range of 1 to 1.5 moles per 1 mole of available chlorine in the chlorine-based oxidizing agent.

In the first embodiment of the composition of the present invention which comprises the chlorine-based oxidizing agent and sulfamic acid or a salt thereof, the composition has a pH of 13 or greater and preferably 13.5 or greater. In the second embodiment of the composition of the present invention which comprises the chlorine-based oxidizing agent, an azole compound and sulfamic acid or a salt thereof, it is preferable that the composition has a pH of 13 or greater and more preferably 13.5 or greater. When the composition has a pH smaller than 13, the stabilizing effect of the chlorine-based oxidizing agent decreases and there is the possibility that the rate of the decrease in the concentration of residual chlorine increases.

The azole compound used in the present invention is an aromatic compound having a five-membered ring having two or more hetero atoms. Examples of the azole compound used in the present invention include single ring azole compounds such as imidazole, pyrazole, oxazole, thiazole, triazole and tetrazole; condensed multi-ring azole compounds such as benzimidazole, benzoxazole, benzisooxazole, benzothiazole, mercaptobenzimidazole, mercaptomethylbenzimidazole, mercaptobenzothiazole, benzotriazole, totyltriazole, indazole, purine, imidazothiazole and pyrazoxazole; and salts of these azole compounds when the azole compounds form salts. The azole compound may be used singly or in combination of two or more. In the composition of the present invention, the content of the azole compound is not particularly limited. It is preferable that the content of the azole compound is in the range of 0.05 to 3% by weight and more preferably in the range of 0.1 to 2% by weight.

The water system to which the microbicidal and algicidal process of the present invention is applied is not particularly limited. Examples of the water system include cooling water systems, water systems in paper and pulp manufacturing processes, dust-collecting water systems, scrubber water systems and fountain water systems. In the microbicidal and algicidal process of the present invention, the process for adding the chlorine-based oxidizing agent, the azole compound and sulfamic acid or the salt thereof is not particularly limited. For example, the chlorine-based oxidizing agent, the azole compound and sulfamic acid or the salt thereof may be added each separately, two of these components may be added simultaneously and the remaining component may be added separately or the three components may be added simultaneously. Among these processes of addition, it is preferable that the composition comprising the chlorine-based oxidizing agent, the azole compound and sulfamic acid or the salt thereof is prepared in advance and the prepared composition is added to the water system. By preparing the composition comprising the chlorine-based oxidizing agent, the azole compound and sulfamic acid or the salt thereof in advance, the loss in the effective components of the composition by decomposition can be prevented.

By using the composition of the present invention or in accordance with the process of the present invention, the high concentration of residual chlorine can be maintained and the microbicidal and algicidal effect can be effectively exhibited to a water system even when the water system is in the environment exposed to ultraviolet light or copper or copper alloys are used for piping and heat exchangers in the water systems.

As the pH regulator used in the present invention, conventional alkali compounds can be used and sodium hydroxide and potassium hydroxide are preferable.

In the process for producing a microbicidal and algicidal composition of the present invention, the process for preparing an aqueous solution comprising sulfamic acid or the salt thereof and the pH regulator is not particularly limited. The azole compounds and/or other agents may be present in combination. The order of addition of water and sulfamic acid or the salt thereof is not particularly limited.

In accordance with the process for producing a microbicidal and algicidal composition of the present invention, the microbicidal and algicidal composition of the present invention can be produced safely without causing a decrease in the concentration of the effective components.

To summarize the advantages of the present invention, decomposition of the effective components is prevented and the high concentration of residual chlorine is maintained due to the presence of the combination of the chlorine-based oxidizing agent and sulfamic acid or a salt thereof and the alkaline condition maintained at a pH of 13 or greater. By further adding the azole compound, a still higher concentration of residual chlorine is maintained and the microbicidal and algicidal effect is more effectively exhibited on water systems. In accordance with the process for producing a microbicidal and algicidal composition of the present invention, the microbicidal and algicidal composition can be produced safely without causing a decrease in the concentration of residual chlorine.

EXAMPLES

The present invention will be described more specifically with reference to examples in the following. However, the present invention is not limited to the examples.

In Examples and Comparative Examples, the concentration of residual chlorine was measured in accordance with the method of titration with iodine described in Japanese Industrial Standard K 0101 28.3.

In Examples 1 to 13 and Comparative Examples 1 to 5, the microbicidal and algicidal compositions were prepared by preparing a mixed aqueous solution from water and components excluding sodium hypochlorite, followed by adding an aqueous solution of sodium hypochlorite to the prepared solution. In Examples 1 to 4 and Comparative Examples 1 to 3, the prepared microbicidal and algicidal compositions were each placed in a white narrow-necked polyethylene bottle having a capacity of 100 ml. The bottles were left standing in a thermostatted vessel kept at 40°C or 60°C in the condition such that the bottles were shielded from light from the outside. The concentration of residual chlorine in the composition was measured after 0, 6, 14 and 20 days.

Example 1

A microbicidal and algicidal composition was prepared from 12.4 g of water, 15.6 g of a 48% aqueous solution of sodium hydroxide, 12.0 g of sulfamic acid and 60.0 g of an aqueous solution of sodium hypochlorite containing 12% by weight of available chlorine. The prepared microbicidal and algicidal composition had a pH of 13.4.

The concentration of residual chlorine in the microbicidal and algicidal composition was: 7.2% by weight immediately after the preparation, 7.0% by weight after 6 days, 6.9% by weight after 14 days and 6.8% by weight after 20 days when the composition was left standing at 40°C; and 7.2% by weight immediately after the preparation, 6.2% by weight after 6 days, 4.9% by weight after 14 days and 4.8% by weight after 20 days when the composition was left standing at 60°C.

Example 2

A microbicidal and algicidal composition was prepared in accordance with the same procedures as those conducted in Example 1 except that 8.7 g of water and 19.3 g of the 48% aqueous solution of sodium hydroxide were used. The prepared microbicidal and algicidal composition had a pH of 13.8. The concentration of residual chlorine was measured in accordance with the same method as that in Example 1.

Example 3

A microbicidal and algicidal composition was prepared from 11.9 g of water, 15.6 g of a 48% aqueous solution of sodium hydroxide, 12.0 g of sulfamic acid, 60.0 g of an aqueous solution of sodium hypochlorite containing 12% by weight of available chlorine and 0.5 g of benzotriazole. The prepared microbicidal and algicidal composition had a pH of 13.4. The concentration of residual chlorine was measured in accordance with the same method as that in Example 1.

Example 4

A microbicidal and algicidal composition was prepared in accordance with the same procedures as those conducted in Example 3 except that 8.2 g of water and 19.3 g of the 48% aqueous solution of sodium hydroxide were used. The prepared microbicidal and algicidal composition had a pH of 13.8. The concentration of residual chlorine was measured in accordance with the same method as that in Example 1.

Comparative Example 1

A microbicidal and algicidal composition was prepared from 39.5 g of water, 60.0 g of an aqueous solution of sodium hypochlorite containing 12% by weight of available chlorine and 0.5 g of benzotriazole. The prepared microbicidal and algicidal composition had a pH of 13.0.

The concentration of residual chlorine in the microbicidal and algicidal composition was: 7.2% by weight immediately after the preparation, 5.7% by weight after 6 days, 4.4% by weight after 14 days and 4.2% by weight after 20 days when the composition was left standing at 40°C; and 7.2% by weight immediately after the preparation, 3.7% by weight after 6 days, 2.4% by weight after 14 days and 2.4% by weight after 20 days when the composition was left standing at 60°C.

Comparative Example 2

A microbicidal and algicidal composition was prepared from 16.9 g of water, 10.6 g of a 48% by weight aqueous solution of sodium hydroxide, 12.0 g of sulfamic acid, 60.0 g of an aqueous solution of sodium hypochlorite containing 12% by weight of available chlorine and 0.5 g of benzotriazole. The prepared microbicidal and algicidal composition had a pH of 12.0. The concentration of residual chlorine was measured in accordance with the same method as that in Example 1.

Comparative Example 3

A microbicidal and algicidal composition was prepared from 17.4 g of water, 10.6 g of a 48% by weight aqueous solution of sodium hydroxide, 12.0 g of sulfamic acid and 60.0 g of an aqueous solution of sodium hypochlorite containing 12% by weight of available chlorine. The prepared microbicidal and algicidal composition had a pH of 12.0. The concentration of residual chlorine was measured in accordance with the same method as that in Example 1.

The results in Examples 1 to 4 and Comparative Examples 1 to 3 are shown in Table 1.

Table 1

| Example | 1 | 2 | 3 | 4 | | | |
|---|---|---|---|---|---|---|---|
| Comparative Example | | | | | 1 | 2 | 3 |
| Composition of components (g) | | | | | | | |
| water | 12.4 | 8.7 | 11.9 | 8.2 | 39.5 | 16.9 | 17.4 |
| 48% by wt. NaOH | 15.6 | 19.3 | 15.6 | 19.3 | - | 10.6 | 10.6 |
| sulfamic acid | 12.0 | 12.0 | 12.0 | 12.0 | - | 12.0 | 12.0 |
| 12% by wt. NaClO (*) | 60.0 | 60.0 | 60.0 | 60.0 | 60.0 | 60.0 | 60.0 |
| benzotriazole | - | - | 0.5 | 0.5 | 0.5 | 0.5 | - |
| pH | 13.4 | 13.8 | 13.4 | 13.8 | 13.0 | 12.0 | 12.0 |
| Concentration of residual chlorine (% by weight) | | | | | | | |
| left standing at 40°C | | | | | | | |
| for 0 days | 7.2 | 7.2 | 7.2 | 7.2 | 7.2 | 7.2 | 7.2 |
| for 6 days | 7.0 | 7.1 | 7.0 | 7.1 | 5.7 | 2.1 | 2.1 |
| for 14 days | 6.9 | 7.0 | 6.8 | 7.0 | 4.4 | 1.1 | 1.1 |
| for 20 days | 6.8 | 6.7 | 6.8 | 6.7 | 4.2 | 0 | 0 |
| left standing at 60°C | | | | | | | |
| for 0 days | 7.2 | 7.2 | 7.2 | 7.2 | 7.2 | 7.2 | 7.2 |
| for 6 days | 6.2 | 6.9 | 6.2 | 6.9 | 3.7 | 0.5 | 0.5 |
| for 14 days | 4.9 | 6.2 | 4.9 | 6.1 | 2.4 | 0 | 0 |
| for 20 days | 4.8 | 6.2 | 4.8 | 6.1 | 2.4 | 0 | 0 |

* An aqueous solution of sodium hypochlorite containing 12% by weight of available chlorine was used.

As shown in Table 1, the microbicidal and algicidal composition of Comparative Example 1 which contained benzotriazole but did not contain sulfamic acid and had a pH of 13.0 showed rapid decomposition of sodium hypochlorite and a rapid decrease in the concentration of residual chlorine.

The microbicidal and algicidal compositions of Comparative Examples 2 and 3 which contained sulfamic acid but had a pH of 12.0 showed rapid decomposition of sodium hypochlorite and rapid decreases in the concentration of residual chlorine independently of the presence or the absence of benzotriazole.

The microbicidal and algicidal compositions of Examples 1 and 3 which contained the aqueous solution of sodium hydroxide in increased amounts and had a pH of 13.4 and the microbicidal and algicidal compositions of Examples 2 and 4 which contained the aqueous solution of sodium hydroxide in increased amounts and had a pH of 13.8 showed small decreases in the concentration of residual chlorine independently of the presence or the absence of benzotriazole. It was shown that the decomposition of sodium hypochlorite was effectively suppressed by using sodium hypochlorite and sulfamic acid in combination and adjusting pH at 13 or greater. In particular, stability at a high temperature was improved by increasing the amount of sodium hydroxide.

In Examples 5 to 9 and Comparative Examples 4 and 5, the prepared microbicidal and algicidal compositions were each placed in a white narrow-necked polyethylene bottle having a capacity of 100 ml. The seven bottles arranged in a row were left standing outdoors at a place exposed to the sunlight in Atsugi City from April 10 to 30. The concentration of residual chlorine in the compositions was measured after 0, 6, 14 and 20 days.

Example 5

A microbicidal and algicidal composition was prepared from 12.4 g of water, 15.6 g of a 48% aqueous solution of sodium hydroxide, 12.0 g of sulfamic acid and 60.0 g of an aqueous solution of sodium hypochlorite containing 12% by weight of available chlorine. The prepared microbicidal and algicidal composition had a pH of 13.4.

The concentration of residual chlorine in the microbicidal and algicidal composition was: 7.2% by weight immediately after the preparation, 6.1% by weight after 6 days, 4.0% by weight after 14 days and 3.0% by weight after 20 days.

Example 6

A microbicidal and algicidal composition was prepared from 12.4 g of water, 15.6 g of a 48% aqueous solution of sodium hydroxide, 12.0 g of sulfamic acid, 60.0 g of an aqueous solution of sodium hypochlorite containing 12% by weight of available chlorine and 0.2 g of benzotriazole. The prepared microbicidal and algicidal composition had a pH of 13.4.

The concentration of residual chlorine in the microbicidal and algicidal composition was: 7.2% by weight immediately after the preparation, 6.4% by weight after 6 days, 5.2% by weight after 14 days and 4.4% by weight after 20 days.

Example 7

A microbicidal and algicidal composition was prepared and pH and the concentration of residual chlorine were measured in accordance with the same procedures as those conducted in Example 6 except that 0.5 g of benzotriazole was used.

Example 8

A microbicidal and algicidal composition was prepared and pH and the concentration of residual chlorine were measured in accordance with the same procedures as those conducted in Example 6 except that 1.0 g of benzotriazole was used.

Example 9

A microbicidal and algicidal composition was prepared and pH and the concentration of residual chlorine were measured in accordance with the same procedures as those conducted in Example 6 except that 0.5 g of tolyltriazole was used in place of benzotriazole.

Comparative Example 4

A microbicidal and algicidal composition was prepared from 24.4 g of water, 15.6 g of a 48% aqueous solution of sodium hydroxide and 60.0 g of an aqueous solution of sodium hypochlorite containing 12% by weight of available chlorine. The prepared microbicidal and algicidal composition had a pH of 14.0.

The concentration of residual chlorine in the microbicidal and algicidal composition was: 7.2% by weight immediately after the preparation, 5.7% by weight after 6 days, 3.9% by weight after 14 days and 2.8% by weight after 20 days.

Comparative Example 5

A microbicidal and algicidal composition was prepared and pH and the concentration of residual chlorine were measured in accordance with the same procedures as those conducted in Comparative Example 4 except that 2.0 g of benzotriazole was used.

The results of Examples 5 to 9 and Comparative Examples 4 and 5 are shown in Table 2.

Table 2

| Example | 5 | 6 | 7 | 8 | 9 | | |
|---|---|---|---|---|---|---|---|
| Comparative Example | | | | | | 4 | 5 |
| Composition of components (g) | | | | | | | |
| water | 12.4 | 12.4 | 12.4 | 12.4 | 12.4 | 24.4 | 24.4 |
| 48% by wt. NaOH | 15.6 | 15.6 | 15.6 | 15.6 | 15.6 | 15.6 | 15.6 |
| sulfamic acid | 12.0 | 12.0 | 12.0 | 12.0 | 12.0 | - | - |
| 12% by wt. NaClO (*) | 60.0 | 60.0 | 60.0 | 60.0 | 60.0 | 60.0 | 60.0 |
| benzotriazole | - | 0.2 | 0.5 | 1.0 | - | - | 2.0 |
| tolyltriazole | - | - | - | - | 0.5 | - | - |

* An aqueous solution of sodium hypochlorite containing 12% by weight of available chlorine was used.

Table 2  (continued)

| Example | 5 | 6 | 7 | 8 | 9 | | |
|---|---|---|---|---|---|---|---|
| Comparative Example | | | | | | 4 | 5 |
| Composition of components (g) | | | | | | | |
|     pH | 13.4 | 13.8 | 13.4 | 13.4 | 13.4 | 14.0 | 14.0 |
| Concentration of residual chlorine (% by weight) | | | | | | | |
|     after 0 days | 7.2 | 7.2 | 7.2 | 7.2 | 7.2 | 7.2 | 7.2 |
|     after 6 days | 6.1 | 6.4 | 6.9 | 7.0 | 6.8 | 5.7 | 5.3 |
|     after 14 days | 4.0 | 5.2 | 6.1 | 6.3 | 6.4 | 3.9 | 2.7 |
|     after 20 days | 3.0 | 4.4 | 5.7 | 5.9 | 6.2 | 2.8 | 1.1 |

As shown in Table 2, in Examples 5 to 8 in which sulfamic acid or a combination of sulfamic acid and benzotriazole was used, the high concentration of residual chlorine was maintained after passage of time and decomposition of the effective components was suppressed. Since the greater the amount of benzotriazole, the higher the concentration of residual chlorine, it was shown that benzotriazole contributed to suppressing decomposition of the effective components. In Example 9 in which sulfamic acid and tolyltriazole were used, the high concentration of residual chlorine was maintained after passage of time and decomposition of the effective components was suppressed.

In contrast, in Comparative Example 4 in which none of azole compounds and sulfamic acid was used, the concentration of residual chlorine after passage of time was lower than that in Examples and the effect of suppressing decomposition of the effective components was not exhibited. In Comparative Example 5 in which benzotriazole alone was used, the concentration of residual chlorine was lower than that in Comparative Example 4 and the effect of accelerating decomposition of the effective components was exhibited when benzotriazole alone was used. Although sulfamic acid exhibited only small effect of suppressing decomposition of the effective components in the single use and the azole compound exhibited the effect of accelerating decomposition of the effective components in the single use, the specific synergistic effect could be exhibited when these components were used in combination. Thus, decomposition of the effective components could be effectively suppressed and the high concentration of residual chlorine could be maintained.

In Examples 10 to 13, a circulating water system shown in Figure 1 which was equipped with a water tank 1, a pump 2, a flow meter 3 and a copper tube 4 was used. The amount of retained water in this water system was 15 liters. The copper tube had a length of 1,350 mm and an inner diameter of 19 mm. In this water system, city water of Atsugi city was used as the test water. A prepared microbicidal and algicidal composition was added in an amount of 3.0 g and water was circulated at a flow rate of 10 liters/minute at a temperature of 30°C. The concentration of residual chlorine in the water was measured after 24 hours and 72 hours.

Example 10

A microbicidal and algicidal composition was prepared from 12.4 g of water, 15.6 g of a 48% aqueous solution of sodium hydroxide, 12.0 g of sulfamic acid and 60.0 g of an aqueous solution of sodium hypochlorite containing 12% by weight of available chlorine. The prepared microbicidal and algicidal composition had a pH of 13.4.

The concentration of residual chlorine in the circulating water to which this microbicidal and algicidal composition was added was: 13.0 mg/liter after 24 hours and 10.5 mg/liter after 72 hours and 72.9% of the concentration of residual chlorine remained after 72 hours.

Example 11

A microbicidal and algicidal composition was prepared from 12.15 g of water, 15.6 g of a 48% aqueous solution of sodium hydroxide, 12.0 g of sulfamic acid, 60.0 g of an aqueous solution of sodium hypochlorite containing 12% by weight of available chlorine and 0.25 g of benzotriazole. The prepared microbicidal and algicidal composition had a pH of 13.4.

The concentration of residual chlorine in the circulating water to which this microbicidal and algicidal composition was added was: 13.5 mg/liter after 24 hours and 13.0 mg/liter after 72 hours and 90.3% of the concentration of residual chlorine remained after 72 hours.

Example 12

A microbicidal and algicidal composition was prepared, pH of the prepared composition was measured, the prepared composition was added to the circulating water system and the concentration of residual chlorine in the water was measured in accordance with the same procedures as those conducted in Example 11 except that 11.9 g of water and 0.5 g of benzotriazole were used.

Example 13

A microbicidal and algicidal composition was prepared, pH of the prepared composition was measured, the prepared composition was added to the circulating water system and the concentration of residual chlorine in the water was measured in accordance with the same procedures as those conducted in Example 11 except that 11.4 g of water and 1.0 g of benzotriazole were used.

The results of Examples 10 to 13 are shown in Table 3.

Table 3

| Example | | 10 | 11 | 12 | 13 |
|---|---|---|---|---|---|
| Composition of components (g) | | | | | |
| | water | 12.4 | 12.15 | 11.9 | 11.4 |
| | 48% by wt. NaOH | 15.6 | 15.6 | 15.6 | 15.6 |
| | sulfamic acid | 12.0 | 12.0 | 12.0 | 12.0 |
| | 12% by wt. NaClO (*) | 60.0 | 60.0 | 60.0 | 60.0 |
| | benzotriazole | - | 0.25 | 0.5 | 1.0 |
| pH | | 13.4 | 13.4 | 13.4 | 13.4 |
| | Microbicidal and algicidal composition (mg/liter) | 200 | 200 | 200 | 200 |
| | Benzotriazole (mg/liter) | - | 0.5 | 1.0 | 2.0 |
| Concentration of residual chlorine (mg/liter) | | | | | |
| | after 24 hours | 13.0 | 13.5 | 14.4 | 14.4 |
| | after 72 hours | 10.5 | 13.0 | 14.4 | 14.4 |
| Concentration of residual chlorine remaining after 72 hours (%) | | 72.9 | 90.3 | 100 | 100 |

* An aqueous solution of sodium hypochlorite containing 12% by weight of available chlorine was used.

As shown in Table 3, in Examples 12 and 13 in which the microbicidal and algicidal compositions containing benzotriazole were used, the concentration of residual chlorine was higher after passage of time and decomposition of the effective components were more suppressed in comparison with the result in Example 10 in which the microbicidal and algicidal composition not containing benzotriazole was used. When the concentration of benzotriazole in the circulating water was 1.0 mg/liter or higher, the concentration of residual chlorine did not decrease at all after 72 hours.

Example 14

Water in an amount of 6.7 g, 19.3 g of a 48% by weight aqueous solution of sodium hydroxide, 2.0 g of benzotriazole and 12.0 g of sulfamic acid were weighed and placed into a 200 ml glass beaker successively in this order. After the above components were dissolved under stirring, 60.0 g of an aqueous solution of sodium hypochlorite containing 12% by weight of available chlorine was added under stirring and a microbicidal and algicidal composition was prepared after stirring.

The preparation of the microbicidal and algicidal composition could be conducted without bumping although some bubbling was observed. The concentration of residual chlorine in the obtained microbicidal and algicidal composition was 7.2% by weight.

Comparative Example 6

Water in an amount of 6.7 g, 19.3 g of a 48% by weight aqueous solution of sodium hydroxide, 2.0 g of benzotriazole and 12.0 g of sulfamic acid were weighed and placed into a 200 ml glass beaker successively in this order. After the above components were dissolved under stirring, the prepared solution was added in small portions under stirring into a 200 ml glass beaker into which 60.0 g of an aqueous solution of sodium hypochlorite containing 12% by weight of available chlorine was weighed and placed in advance. During the addition and mixing, bubbles began to be formed and eventually bumping took place. Thus, the generation of chlorine gas was observed.

**Claims**

1. A microbicidal and algicidal composition which comprises a chlorine-based oxidizing agent, an azole-based compound, and sulfamic acid or a salt thereof and has a pH of 13 or greater.

2. A composition according to Claim 1, wherein the chlorine-based oxidizing agent is sodium hypochlorite.

3. A composition according to any one of Claims 1 and 2, wherein the azole-based compound is benzotriazole or tolyltriazole.

4. A composition according to any one of Claims 1, 2 and 3, wherein a content of sulfamic acid or a salt thereof is in a range of 0.3 to 1.5 moles per 1 mole of available chlorine in the chlorine-based oxidizing agent.

5. A composition according to any one of Claims 1 to 4, wherein a content of the azole-based compound is in a range of 0.05 to 3% by weight.

6. A composition according to any one of Claims 1 to 5, wherein a content of the chlorine-based oxidizing agent is in a range of 3 to 12% by weight expressed as the content of available chlorine.

7. A microbicidal and algicidal process for a water system which comprises adding a chlorine-based oxidizing agent, an azole-based compound and sulfamic acid or a salt thereof to the water system.

8. A process according to Claim 7, wherein the chlorine-based oxidizing agent is sodium hypochlorite.

9. A process according to any one of Claims 7 and 8, wherein the azole-based compound is benzotriazole or tolyltriazole.

10. A process for producing a microbicidal and algicidal composition which comprises preparing an aqueous solution comprising at least sulfamic acid or a salt thereof, a pH regulator, and an azole-based compound and, thereafter, adding a chlorine-based oxidizing agent to the prepared aqueous solution, wherein the microbicidal and algicidal composition is adjusted to have a pH of 13 or greater.

11. A process according to Claim 10, wherein the chlorine-based oxidizing agent is sodium hypochlorite.

12. A process according to any one of Claims 10 and 11, wherein a content of the chlorine-based oxidizing agent is in a range of 3 to 12% by weight expressed as the content of available chlorine.

13. A process according to any one of Claims 10, 11 and 12, wherein a content of sulfamic acid or a salt thereof is in a range of 0.3 to 1.5 moles per 1 mole of available chlorine in the chlorine-based oxidizing agent.

14. A process according to any one of Claims 10 to 13, wherein a content of the azole-based compound is in a range of 0.05 to 3% by weight.

**Patentansprüche**

1. Mikrobizide und algizide Zusammensetzung, die ein Chlor-basiertes Oxidationsmittel, eine Azol-basierte Verbindung und Sulfamidsäure oder ein Salz davon umfaßt und einen pH von 13 oder mehr aufweist.

2. Zusammensetzung nach Anspruch 1, wobei das Chlor-basierte Oxidationsmittel Natriumhypochlorid ist.

3. Zusammensetzung nach einem der Ansprüche 1 und 2, wobei die Azol-basierte Verbindung Benzotriazol oder Tolyltriazol ist.

## EP 1 287 741 B1

4. Zusammensetzung nach einem der Ansprüche 1, 2 und 3, wobei ein Gehalt von Sulfamidsäure oder einem Salz davon im Bereich von 0,3 bis 1,5 Mol pro 1 Mol erhältlichem Chlor in dem Chlor-basierten Oxidationsmittel vorliegt.

5. Zusammensetzung nach einem der Ansprüche 1 bis 4, wobei ein Gehalt der Azol-basierten Verbindung in einem Bereich von 0,05 bis 3 Gew.% vorliegt.

6. Zusammensetzung nach einem der Ansprüche 1 bis 5, wobei ein Gehalt des Chlor-basierten Oxidationsmittels im Bereich von 3 bis 12 Gew.% vorliegt, ausgedrückt als der Gehalt von verfügbarem Chlor.

7. Mikrobizides und algizides Verfahren für ein Wassersystem, das Hinzufügen eines Chlor-basierten Oxidationsmittels, einer Azol-basierten Verbindung und Sulfamidsäure oder einem Salz davon zu dem Wassersystem umfaßt.

8. Verfahren nach Anspruch 7, wobei das Chlor-basierte Oxidationsmittel Natriumhypochlorid ist.

9. Verfahren nach einem der Ansprüche 7 und 8, wobei die Azol-basierte Verbindung Benzotriazol oder Tolyltriazol ist.

10. Verfahren zur Herstellung einer mikrobiziden und algiziden Zusammensetzung, das Präparieren einer wäßrigen Lösung, umfassend mindestens Sulfamidsäure oder ein Salz davon, einen pH-Regulator und eine Azol-basierte Verbindung und danach das Hinzufügen eines Chlor-basierten Oxidationsmittels zu der präparierten wäßrigen Lösung umfaßt, wobei die mikrobizide und algizide Zusammensetzung so eingestellt wird, um einen pH von 13 oder mehr aufzuweisen.

11. Verfahren nach Anspruch 10, wobei das Chlor-basierte Oxidationsmittel Natriumhypochlorid ist.

12. Verfahren nach einem der Ansprüche 10 und 11, wobei ein Gehalt des Chlor-basierten Oxidationsmittels in einem Bereich von 3 bis 12 Gew.%, ausgedrückt als der Gehalt von verfügbarem Chlor, vorliegt.

13. Verfahren nach einem der Ansprüche 10, 11 und 12, wobei ein Gehalt von Sulfamidsäure oder einem Salz davon in einem Bereich von 0,3 bis 1,5 Mol pro 1 Mol von verfügbarem Chlor in dem Chlor-basierten Oxidationsmittel vorhanden ist.

14. Verfahren nach einem der Ansprüche 10 bis 13, wobei ein Gehalt der Azol-basierten Verbindung in einen Bereich von 0,05 bis 3 Gew.% vorliegt.

**Revendications**

1. Composition microbicide et algicide qui comprend un agent d'oxydation à base de chlore, un composé à base d'azole et l'acide sulfamique ou un sel de celui-ci et qui a un pH de 13 ou plus.

2. Composition selon la revendication 1, dans laquelle l'agent d'oxydation à base de chlore est l'hypochlorite de sodium.

3. Composition selon l'une quelconque des revendications 1 et 2, dans laquelle le composé à base d'azole est le benzotriazole ou le tolyltriazole.

4. Composition selon l'une quelconque des revendications 1, 2 et 3, dans laquelle la teneur de l'acide sulfamique ou d'un sel de celui-ci est comprise dans la plage allant de 0,3 à 1,5 moles pour 1 mole de chlore disponible dans l'agent d'oxydation à base de chlore.

5. Composition selon l'une quelconque des revendications 1 à 4, dans laquelle la teneur du composé à base d'azole est comprise dans la plage allant de 0,05 à 3 % en poids.

6. Composition selon l'une quelconque des revendications 1 à 5, dans laquelle la teneur de l'agent d'oxydation à base de chlore est comprise dans la plage allant de 3 à 12 % en poids, exprimée comme la teneur de chlore disponible.

7. Procédé microbicide et algicide pour un système aqueux, qui comprend l'ajout d'un agent d'oxydation à base de chlore, d'un composé à base d'azole et de l'acide sulfamique ou d'un sel de celui-ci au système aqueux.

8. Procédé selon la revendication 7, dans lequel l'agent d'oxydation à base de chlore est l'hypochlorite de sodium.

9. Procédé selon l'une quelconque des revendications 7 et 8, dans lequel le composé à base d'azole est le benzotriazole ou le tolyltriazole.

10. Procédé de production d'une composition microbicide et algicide, qui comprend la préparation d'une solution aqueuse comprenant au moins l'acide sulfamique ou un sel de celui-ci, un régulateur de pH et un composé à base d'azole, et ensuite l'ajout d'un agent d'oxydation à base de chlore à la solution aqueuse préparée, où le pH de la composition microbicide et algicide est ajusté pour être égal à 13 ou plus.

11. Procédé selon la revendication 10, dans lequel l'agent d'oxydation à base de chlore est l'hypochlorite de sodium.

12. Procédé selon l'une quelconque des revendications 10 et 11, dans lequel la teneur de l'agent d'oxydation à base de chlore est comprise dans la plage allant de 3 à 12 % en poids, exprimée comme la teneur de chlore disponible.

13. Procédé selon l'une quelconque des revendications 10, 11 et 12, dans lequel la teneur de l'acide sulfamique ou d'un sel de celui-ci est comprise dans la plage allant de 0,3 à 1,5 moles pour 1 mole de chlore disponible dans l'agent d'oxydation à base de chlore.

14. Procédé selon l'une quelconque des revendications 10 à 13, dans lequel la teneur du composé à base d'azole est comprise dans la plage allant de 0,05 à 3 % en poids.

# FIGURE 1